# EUROPEAN PATENT APPLICATION

(11) **EP 3 483 861 A1**
(43) Date of publication of application: **15.05.2019**
(21) Application number: 17826961.9
(22) Date of filing: 11.07.2017
(51) Int. Cl.: G09B 23/28

(54) **BLOOD FLOW PATH SIMULATION SYSTEM**

(30) Priority: 11.07.2016 CN 201610541287; 11.07.2016 CN 201620724972 U
(71) Applicant: Suzhou Medical Implant Mechanics Co., Ltd, Suzhou, Jiangsu 215123 (CN)
(72) Inventor: NIU, Dongzi, Suzhou Jiangsu 215123 (CN); ZUO, Hui, Suzhou Jiangsu 215123 (CN); XU, Garyguorong, Suzhou Jiangsu 215123 (CN); XIA, Yin, Suzhou Jiangsu 215123 (CN)
(74) Representative: Haseltine Lake LLP
(86) International application number: PCT/CN2017/092428
(87) International publication number: WO 2018/010625

(57) **Abstract**

A simulated circulatory system of blood for evaluating a vascular implant is provided herein, comprising: a simulated blood vessel assembly, a simulated heart assembly and simulated blood which is contained within the simulated blood vessel assembly, wherein the simulated heart assembly allows the simulated blood to circulate in the simulated blood vessel assembly. The simulated blood vessel assembly comprises at least two segments of simulated blood vessels and at least one connection assembly, the at least two segments are connected in fluid communication by the at least one connection assembly, and the at least one connection assembly is configured to adapt for the introducing of the implant into the simulated blood vessels. The simulated circulatory system of blood in human body as disclosed herein is able to simulate intravascular situations *in vitro* under various heart rates and cardiac outputs, so as to monitor the use of artificial cardiac valves and vascular implants in a simulated situation and evaluate the performance thereof.

## Description

### CROSS REFERENCE TO RELATED APPLICATIONS

This application claims the benefit of, and priority to, Chinese Invention Patent Application Serial No. 201610541287.8 and Chinese Utility Model Application Serial No. 201620724972.X, filed on July 11, 2016, the entire disclosures of which are hereby incorporated by reference in their entireties.

### FIELD OF THE INVENTION

The present invention relates to a simulated circulatory system of blood, in particular, relates to a simulated circulatory system of blood used for evaluating vascular implants.

### BACKGROUND OF THE INVENTION

Circulatory system of blood (cardiovascular system) in human body essentially involves blood, blood vessels and heart. Blood is a viscous liquid enriched with various nutrients. Blood vessels function to transport blood. Heart supplies power (pressure and speed of blood) for circulation of blood. When blood vessels in human body exhibit ageing, blocking and lesion, blood flow is significantly influenced. To solve this problem, stents are implanted to lesion positions to support the blood vessels at narrow and blocking segments, relieve elastic retraction and re-shape blood vessels, and maintain smooth blood flow.

There is a need for companies focusing on Research & Development of stents and medical personnel to evaluate the stents to be implanted into human body. Common evaluation includes determining whether the stents are able to effectively inhibit restenosis, whether the stents exhibit movement in human body, and whether the mechanics features such as strength and fatigue of the stents *per se* meet the requirement for working in human body for a long period. Now, evaluation on performance of the stents is carried out by using imaging devices *in vitro* to observe the condition of the stents after implantation of the stents into patients. However, such evaluation has difficulty in observation, and even brings huge risk to the patients which the problem cannot be effectively solved.

For the purpose of solving the above problems, simulated blood vessels have been developed. Clinicians and companies focusing on Research & Development of medical devices use simulated blood vessels to simulate clinic situation of devices. However, most of the existing simulated blood vessels are merely simulated models for a certain part of vessels in human body, for example, simulated blood vessels bearing constant pressure and speed when fluid flows therethrough. Most of the existing simulated blood vessels cannot simulate physiological condition within blood vessels in human body, for example cannot match the pressure and flow rate of the fluid in the simulated blood vessels with the blood pressure in human body, cannot objectively reflect the status of the implanted medical device used in human blood vessels, such as the influence of the implanted device on the flow rate and flux of the fluid, cardiac load and the load on the implanted device *per se.*

### SUMMARY OF THE INVENTION

In view of the problems existing in the current simulated system, a simulated circulatory system of blood is provided herein, which can be used to simulate a situation in human body and evaluate a vascular implant.

A simulated circulatory system of blood for evaluating a vascular implant is provided herein, comprising: a simulated blood vessel assembly, a simulated heart assembly and simulated blood. The simulated blood is contained within the simulated blood vessel assembly and the simulated heart assembly is configured to allow the simulated blood to circulate in the simulated blood vessel assembly. The simulated blood vessel assembly comprises at least two segments of simulated blood vessels and at least one connection assembly. The at least two segments are connected in fluid communication to each other via the at least one connection assembly, wherein the at least one connection assembly is configured to adapt for the introducing of the implant into the simulated blood vessels.

In some embodiments, the connection assembly comprises a connector for connecting the simulated blood vessels. The connector comprises a valve for introducing the vascular implant into the simulated blood vessels. The valve comprises a valve body, a knob and a knob stopper disposed on the valve body. The valve body comprises a path for introducing the implant. The knob is cooperative with the knob stopper and is configured to alter the size of the path of the valve by moving the knob. The system further comprises a rubber tube extending through the path of the valve and allowing the implant to be introduced through the rubber tube and into the simulated blood vessels. The rubber tube and the valve body are sealed by a sealing plug which is interference fit to the valve body.

In some embodiments, the connector is made of transparent materials.

In some embodiments, the connector comprises an adapter and a central body, the adapter is used for connecting the simulated blood vessels, and the central body disposed between the adapters, wherein the valve is disposed on the central body.

In some embodiments, the simulated blood vessels are made of flexible materials or mixture of the flexible materials and radiopaque materials. For example, the flexible materials may include: silicone, latex, rubber and plexiglass. The radiopaque materials may include: silver iodide, barium sulfate, calcium sulfate. Alternatively, the inner wall of the simulated blood vessels is coated by lubricating materials to adjust friction coefficient thereof so as to adjust the friction coefficient of the inner wall of the simulated blood vessels.

In some embodiments, the simulated circulatory system of blood further comprises a control device which comprises a pressure sensor, a flowmeter and a thermometer. The pressure sensor is configured to detect the pressure of the simulated blood passing through the simulated blood vessels. The flowmeter is configured to detect the flux of the simulated blood passing through the simulated blood vessels. The thermometer is configured to detect the temperature of the simulated blood passing through the simulated blood vessels. The control device is configured to control the simulated heart assembly at least in part based on the parameters of the simulated blood detected by the pressure sensor, flowmeter and thermometer.

In some embodiments, the simulated circulatory system of blood further comprises a detection and evaluation device which is connected to the simulated circulatory system of blood and configured to detect parameters of the implant and evaluate the performance of the implant at least in part based on the detected parameters. For example, the detected parameters include the variation of diameter and movement of the implant. The detection and evaluation device comprises an image recognition apparatus, a laser diameter measuring instrument and an evaluation apparatus. The image recognition apparatus is configured to detect the movement of the implant. The laser diameter measuring instrument is configured to detect the variation of the diameter of the implant. The evaluation apparatus is configured to evaluate the performance of the implant at least in part based on the detected parameters.

In some embodiments, the detection and evaluation device further comprises a calculation apparatus which calculates the torsion degree, fatigue life and opening degree of the implant at least in part based on the detected parameters.

In some embodiments, the implant is a stent.

In comparison with prior arts, the present invention achieves the following advantageous effect.

The simulated blood vessel assembly comprises simulated blood vessels and connection assemblies, which forms a multi-segment type. Therefore, blood vessels from various parts can be added into the system as needed without manufacturing a whole set of vessels and thus the system has increased flexibility in use. Meanwhile, the position of the connection assembly is convenient for introducing the implant, such that the system can be used for evaluating the performance of the vascular implant and so on.

Meanwhile, since the said system comprises a control device, this system can excellently simulate human heart rate and cardiac output so as to excellently simulate an intravascular situation.

In addition, the said system provided herein also comprises a detection and evaluation device for monitoring, detecting and evaluating the use of the vascular implant in the simulated situation.

The simulated circulatory system of blood in human body as provided herein can be used for evaluating a vascular implant, can simulate intravascular situations *in vitro* with various heart rates and cardiac outputs, so as to monitor the use of artificial cardiac valves and vascular implants in a simulated situation and evaluate the performance thereof.

### BRIEF DESCRIPTION OF THE DRAWINGS

Figure 1 is a schematic diagram of a simulated circulatory system of blood according to an embodiment of the invention.
Figure 2 shows the simulated blood vessels as shown in Figure 1.
Figure 3 shows the connection assembly at the cut-off site as shown in Figure 2.
Figures 4a and 4b are schematic diagrams of the valve of the connection assembly under working status and closing status.
Figure 5 is a schematic diagram of a simulated circulatory system of blood according to another embodiment of the invention.
Figure 6 is a schematic diagram of a simulated circulatory system of blood according to yet another embodiment of the invention.

### DETAILED DESCRIPTIONS OF THE INVENTION

To understand the present disclosure, it will now be described by way of example, with reference to the accompanying drawings in which implementations of the disclosures are illustrated and, together with the descriptions below, serve to explain the principles of the disclosure.

The structures or materials which are well known in the art are not shown or described in details. The features as described herein may be combined in any way. In addition, the drawings illustrate specific applications and embodiments of the invention, and are not intended to limit the scope of the present disclosure or claims to that what is presented therein. It will be readily understood that the elements in the embodiments, as described herein and as shown in the drawings, can be arranged or designed in different ways or at different scales.

### Embodiment 1

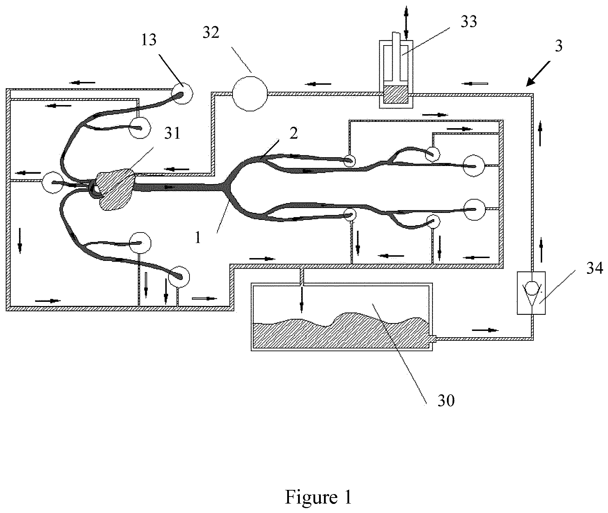

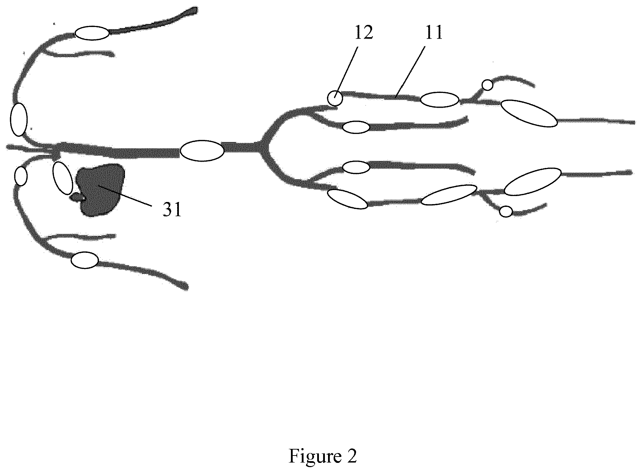

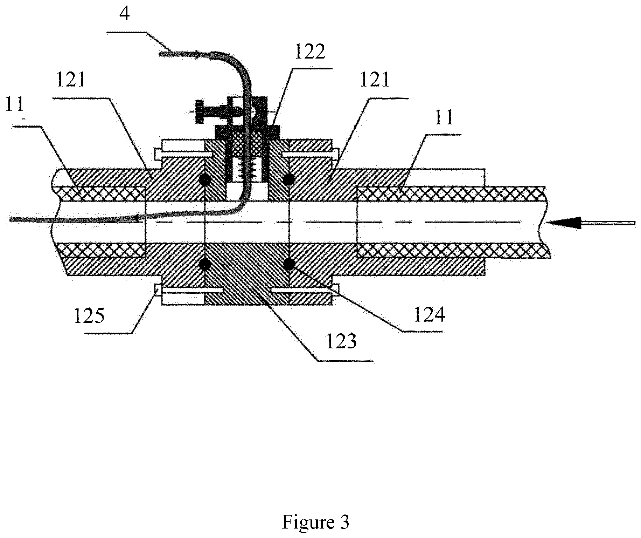

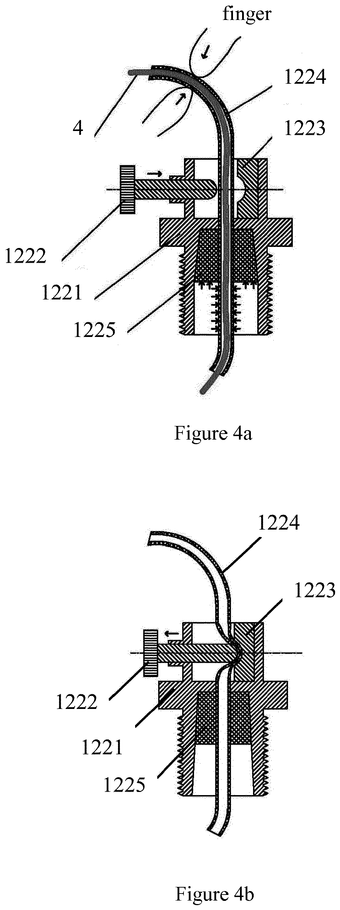

Figure 1 is a schematic diagram of the simulated circulatory system of blood according to one embodiment as described herein. Figure 2 is a separated schematic diagram of the simulated blood vessels as shown in Figure 1. Figure 3 is a schematic diagram of the connection assembly in the separated site in Figure 2. Figures 4a and 4b are schematic diagrams of the valve of the connection assembly under working status and closing status.

As shown in Figure 1, the simulated circulatory system of blood as provided herein comprises a simulated blood vessel assembly 1, simulated blood 2 and a simulated heart assembly 3. The simulated blood 2 is contained within the simulated blood vessel assembly 1 and the simulated heart assembly 3 is configured to allow the simulated blood 2 to circulate in the simulated blood vessel assembly 1.

The simulated blood has similar viscosity to real blood. For example, thickeners can be added into water to make the simulated blood have similar viscosity to real blood.

The simulated blood vessel assembly 1 can be a multi-segment type, in other words, the simulated blood vessel assembly 1 comprises a plurality of segments (at least two segments) of simulated blood vessels 11, and the plurality of segments of simulated blood vessels 11 are connected in fluid communication via at least one connection assembly 12 to form a simulated blood circulatory system. As such, vessels from various parts can be added into the system as needed and there is no need to manufacture a whole set of vessels and add the whole set into the system. Therefore, the system as described herein has increased flexibility for use. Meanwhile, the position of the connection assembly may be easy for implanting the implant.

For example, the simulated blood vessel assembly can simulate a human aortic vascular system. The simulated blood vessels can simulate health human blood vessels or blood vessels with lesion or blood vessels after bypass surgery. For example, the simulated lesion may include hemadostenosis, vascular fistula, vascular tumor, vascular sclerosis and the like. The simulated blood vessels can have compliance the same as real vessels and the implant (such as stent(s) and/or catheter(s) and/or guide wire(s)) can be placed at any positions of the blood vessels.

For example, a long simulated blood vessel can be segmentally processed and then multiple segments of the long blood vessel can be connected with each other by the connection assembly. Otherwise, a whole simulated blood vessel can be cut off at incision sites that are selected according to requirements of a simulated surgery and then the cut-off simulated blood vessels can be connected by using the connection assembly. As shown in Figure 2, the whole aortic vascular system may have seventeen cut-off sites, each of the cut-off sites are connected by the connection assembly. The connection assembly 12 is configured to adapt for the introducing of the implant (not shown) into the simulated blood vessels 11. For example, when performing a simulated surgery, the position of the connection assembly 12 can be served as an incision of surgery for introducing guide wires, catheters (and stents) and the like.

As shown in Figure 3, the connection assembly 12 includes a connector for connecting the simulated blood vessels 11, which comprises a valve 122 for introducing the implant (such as a catheter and/or a guide wire 4) into the simulated blood vessels. For example, the connector can be a tubular element. After two segments of blood vessels are connected by the connector, there is no protrusion or indentation between the inner wall of the simulated blood vessels and the inner wall of the connector so as to ensure that the blood flow is not blocked.

The connector may include an adapter 121 and a central body 123, the adapter 121 is used for connecting the simulated blood vessel to the connector, and the central body 123 is disposed between the adapters 121. The simulated blood vessel 11 is adhered to the adapter 121 by using glue for improved sealing effect. The central body 123 is sandwiched between two adapters 121. The adapter and the central body are fixed to each other by a bolt 125 and sealed by an O-shape sealing ring 124. The connector (i.e., the adapter 121 and the central body 123) is made of transparent materials. In an alternative embodiment, the connector can be an integrated element, or the connector can be made of other appropriate materials which are appropriate for connecting the simulated blood vessels 11.

The valve 122 can be disposed on the central body 123. The valve 122 comprises a valve body 1221, a knob 1222 and a knob stopper 1223 disposed on the valve body 1221. The valve body 1221 comprises a path for introducing the implant 4. The knob 1222 is cooperative with the knob stopper 1223 and the size of the path in the valve can be altered by moving the knob 1222. A rubber tube 1224 extends through the path of the valve and allows the implant 4 to be introduced through the rubber tube 1224 and into the simulated blood vessels.

As shown in Figures 4a and 4b, the knob 1222 is movable along a line by its rotation, with the rubber tube 1224 compressed by cooperation of the knob 1222 and the knob stopper 1223, so as to result in less leakage of fluid.

The rubber tube 1224 and the valve body 1221 can be sealed by a sealing plug 1225 which is made of rubber. The sealing plug 1225 is interference fit to the valve body 1221. For example, the sealing plug 1225 has a diameter greater than that of the inner hole of the valve body 1221. As such, the sealing plug 1225 can be pressed into the valve body 1221. In a practical operation, since the sealing plug 1225 has a diameter greater than that of the inner hole of the valve body 1221, an interference fit therebetween can be achieved (for example the sealing plug is in a conical shape) under the pressure of the liquid, therefore the sealing plug can achieve self-locking and the gap between the rubber tube 1224 and the implant is reduced, result in less leakage of the fluid. Meanwhile, the pressure in the blood vessels can compress the rubber tube 1224 and the sealing plug 1225 so as to further reduce the gap between the rubber tube 1224 and the implant.

The rubber tube 1224 can be selected according to the size of the implant (such as a guide wire/catheter). The rubber tube 1224 is configured to have an inner diameter equivalent to the outer diameter of the implant (such as a guide wire/catheter) to make the implant closely contact the inner wall of the rubber tube 1224 and reduce the gap therebetween so as to reduce leakage of the fluid. Meanwhile, when introducing the implant, the outer wall of the end of the rubber tube 1224 which extends beyond the valve can be pressed by a finger, to block part of the rubber tube and prevent leakage of the fluid.

In an alternative embodiment, the valve can be a cut-off valve such as a gate valve, a stop valve, a ball valve, a butterfly valve, a needle valve, a diaphragm valve or the like. When stopping the simulated implantation and starting observation, it is easy to close the valve to avoid leakage of the simulated blood from the simulated blood vessels.

The simulated blood vessels can be made of flexible materials or mixture of the flexible materials and radiopaque materials. For example, the flexible materials may include: silicone, latex, rubber and plexiglass (preferably silicone or latex). The radiopaque materials include: silver iodide, barium sulfate, calcium sulfate. The addition of the radiopaque materials allows the simulated blood vessels to be imaged by X-ray, such that it is easy for doctors to simulate surgery situations. The simulated blood vessels can be transparent or in various colours. The inner wall of the simulated blood vessels can be coated by lubricating materials for adjusting the friction coefficient of the inner wall of the simulated blood vessels, thereby ensuring that the inner wall of the simulated blood vessels is close to the physiological condition of the human blood vessels.

In the embodiments as described herein, a 3D model of human blood vessels can be established by using data analysis software such as MINICS (an interactive control system for medical images from Materialise Company) based on CT scanning data, so as to manufacture (for example, by using 3D printing, injection molding technologies and the like) the simulated blood vessels that simulate human blood vessels. An accurate model of the major blood vessels can be manufactured by this manufacturing method. For fine blood vessels in human body (i.e., the blood vessels which are difficult to be 3D re-established or modelled), the structure of these blood vessels can be simplified. For example, the curved blood vessels with variable cross-sections can be assumed as straight blood vessels with constant diameters, with the diameters and the lengths similar to those of the straight blood vessels, so as to manufacture the models of the simulated blood vessels.

This method can also be used to manufacture the heart model in the heart assembly to obtain an accurate 3D model.

As shown in Figure 1, the simulated heart assembly further includes a reservoir 30, a simulated heart 31, an electric valve 32, a compressing piston 33 and a one-way valve 34, wherein the reservoir 30 is used for storing the simulated blood, and the electric valve 32, the compressing piston 33 and the one-way valve 34 are connected between the reservoir 30 and the simulated heart 31. An outlet switch valve 13 is disposed at the end of the simulated blood vessel for controlling the simulated blood to pass therethrough. As shown in Figure 1, the simulated blood flows out from the reservoir, through the one-way valve 34, the compressing piston 33 and the electric valve 32 and then into the simulated heart, then the simulated heart distributes the simulated blood to each simulated blood vessel. When the simulated blood flows to the end of each blood vessel, it flows through the outlet switch valve 13 and returns back into the reservoir. This blood circulation can be a closed-loop circulation.

The simulated heart assembly 3 drives the simulated blood to flow through the simulated blood vessel assembly in a way of pulsation by using the piston 33 driven by a motor. The motor includes but not limited to: linear motor, electromagnetic motor, electromagnetic valve, centrifugal pump and the like. Typically, the movement frequency and travel distance of the piston can be calculated based on the heart rate and heart output of human. The simulated heart can be controlled to output the simulated blood to each simulated blood vessel according to a certain frequency by opening and closing the valve 32/34 and controlling movement of the piston 33, such that the simulated blood flows through the simulated blood vessel assembly. The blood can be controlled to flow back to the reservoir at a certain frequency by opening and closing the valve 13. Therefore, control of the simulated heart assembly can simulate the influence of the human heart on the flowing of the blood.

The simulated heart can simulate output under a constant heart rate, or simulate output under various heart rates. The simulated heart assembly can be a turbo-type driver and the power can be pneumatic.

In an alternative embodiment, the simulated blood vessel assembly can merely comprise arteries or further comprise veins, or can be a certain segment of blood vessel. It can be a model of human blood vessels, or a model of animal blood vessels. The model may have a size the same as real human blood vessels or the size can be reduced or enlarged.

### Embodiment 2

Another embodiment of the simulated circulatory system of blood is also provided herein.

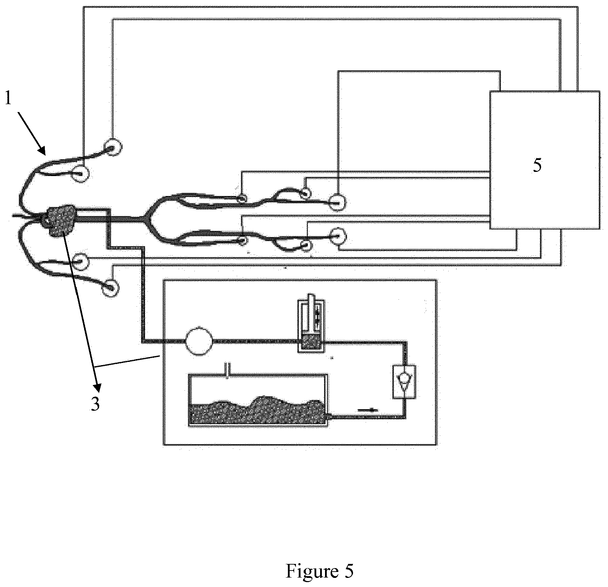

Figure 5 is a schematic diagram of the simulated circulatory system of blood according to another embodiment as described herein.

As shown in Figures 1 and 5, the simulated heart assembly 3 is connected to the simulated blood vessel assembly 1 in series. The simulated heart assembly 3 allows the simulated blood 2 to circulate in the simulated blood vessel assembly 1.

As shown in Figure 5, the simulated circulatory system of blood also comprises a control device 5 which comprises a pressure sensor (not shown), a flowmeter (not shown) and a thermometer (not shown). The pressure sensor is configured to detect the pressure of the simulated blood flowing through the simulated blood vessel assembly. The flowmeter is configured to detect the flux of the simulated blood flowing through the simulated blood vessel assembly. The thermometer is configured to detect the temperature of the simulated blood flowing through the simulated blood vessel assembly. The control device 5 is configured to control the simulated heart assembly at least in part based on the parameters of the simulated blood detected by the pressure sensor, the flowmeter and the thermometer. The pressure sensor, the flowmeter and the thermometer also can be disposed at the end of the simulated blood vessel or other positions. For example, the movement of the piston and the valve of the simulated heart assembly can be adjusted based on the detected pressure and flux to control the simulated heart to output at a simulated heart rate.

The fluid evaluation can be performed on the cardiac valves and the implant by detecting the pressure and the flux of the simulated blood. For example, the evaluation may include: monitoring the influence of the implant on the heart load, calculating the backflow of the cardiac valves, monitoring whether the movement of the implant in the blood vessels results in blocking of other branched blood vessels, and monitoring the influence of the implant on the normal blood flow.

The temperature in the blood vessels can be adjusted in real time by using heating rod based on the temperature detected by the thermometer.

In some embodiments, by linking the blocking sites in lesion vessels, for example, opening a hole on the wall of the simulated blood vessels, or forming bypassed blood vessels integrally, the fluid distribution in the blood vessels after bypass surgery can be simulated and the blood distribution at bypass site can be detected.

### Embodiment 3

Yet another embodiment of the simulated circulatory system of blood is also provided herein.

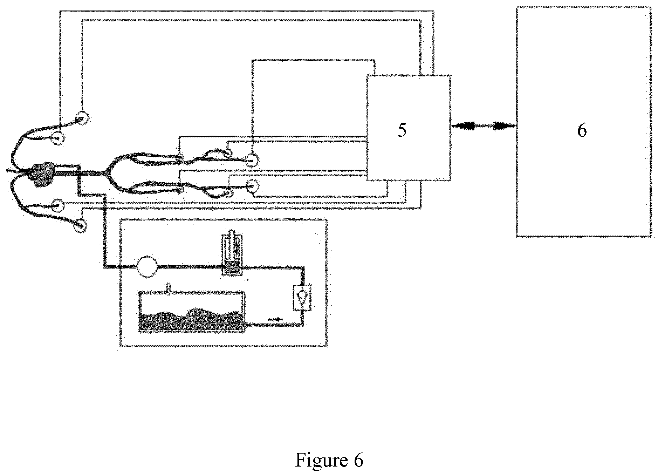

Figure 6 is a schematic diagram of the simulated circulatory system of blood according to yet another embodiment as described herein.

As shown in Figure 6, the simulated circulatory system of blood also comprises a detection and evaluation device 6 that is connected to the simulated circulatory system of blood and configured to detect the parameters of the implant (such as stent) and evaluate the performance of the implant at least in part based on the detected parameters. For example, the detected parameters can include the variation of diameter and the movement of the implant and the like.

The detection and evaluation device may include an image recognition apparatus, a laser diameter measuring instrument and an evaluation apparatus and so on. The evaluation apparatus is configured to evaluate the performance of the implant at least in part based on the detected parameters.

The image recognition apparatus is configured to detect the movement of the implant. For example, the image recognition apparatus can be a camera. The positions of the implant at different times can be obtained by taking photos of the implant, thereby obtaining movement of the implant.

The variation of diameter of the implant can be detected by the laser diameter measuring instrument. During fatigue test for stent according to YY/T 0808-2010 standard, the outer diameter of the stent equals to the inner diameter of the simulated blood vessels. This standard also provides the correlation between the inner diameter and the outer diameter of the simulated blood vessels. Therefore, the outer diameter of the stent can be obtained by measuring the outer diameter of the simulated blood vessels. In a practical operation, the outer diameter of the simulated blood vessels can be measured by the laser diameter measuring instrument, which is a non-contact measuring instrument and thus has no influence on blood flow in the simulated blood vessels. By using such measuring method, the variation of diameter of the simulated blood vessels at the implantation site can be monitored to obtain the variation of diameter of the implant.

In some embodiments, the detection and evaluation device also comprises a calculation apparatus, the calculation apparatus is configured to calculate torsion degree, fatigue life and opening area of the implant at least in part based on the detected parameters. For example, the fatigue life can be evaluated through S/N fatigue life curve. The opening area can be calculated through ISO 5840 equation. Several markers can be marked on the implant (such as stent) and the relative movement between respective markers can be evaluated by the image recognition apparatus (such as camera), thereby calculating the torsion degree.

For example, movement parameters can be used to evaluate the deformation of the implant and then dynamics performances can be obtained by a back-calculating method, thereby predicting the performance after using for a long period such as fatigue life.

The terms as used herein should be considered as illustrative, but not restrictive. It will become obvious to those skilled in the art that myriad other embodiments of the invention are possible, and that such embodiments are contemplated and fall within the scope of the presently claimed invention. The scope of the invention is indicated in the appended claims, and all changes that come within the meaning and range of equivalents are intended to be embraced therein. If there is any conflict in the usages of a word or term in this specification and one or more patent or other documents that may be incorporated herein by reference, the definitions that are consistent with this specification should be adopted.

## Claims

1. A simulated circulatory system of blood for evaluating a vascular implant, comprising: a simulated blood vessel assembly, a simulated heart assembly and simulated blood which is contained within the simulated blood vessel assembly, wherein the simulated heart assembly is configured to allow the simulated blood to circulate in the simulated blood vessel assembly,
wherein the simulated blood vessel assembly comprises at least two segments of simulated blood vessels and at least one connection assembly, the at least two segments are connected in fluid communication by the at least one connection assembly, and the at least one connection assembly is configured to adapt for the introducing of the vascular implant into the simulated blood vessels.

2. The simulated circulatory system of blood according to claim 1, wherein the connection assembly comprises a connector for connecting the simulated blood vessels, and the connector comprises a valve for introducing the vascular implant into the simulated blood vessels.

3. The simulated circulatory system of blood according to claim 2, wherein the valve comprises a valve body, a knob and a knob stopper disposed on the valve body, wherein the valve body comprises a path for introducing the implant, the knob is cooperative with the knob stopper and is configured to alter size of the path of the valve by moving the knob.

4. The simulated circulatory system of blood according to claim 3, further comprising a rubber tube extending through the path of the valve and allowing the implant to be introduced through the rubber tube and into the simulated blood vessels.

5. The simulated circulatory system of blood according to claim 4, wherein the rubber tube and the valve body are sealed by a sealing plug which is interference fit to the valve body.

6. The simulated circulatory system of blood according to claim 2, wherein the connector is made of transparent materials.

7. The simulated circulatory system of blood according to claim 2, wherein the connector comprises an adapter and a central body, the adapter is used for connecting the simulated blood vessel, the central body is disposed between the adapters, and the valve is disposed on the central body.

8. The simulated circulatory system of blood according to claim 1, wherein the simulated blood vessels are made of flexible materials or mixture of flexible materials and radiopaque materials.

9. The simulated circulatory system of blood according to claim 8, wherein the flexible materials include silicone, latex, rubber and plexiglass, and the radiopaque materials include silver iodide, barium sulfate, calcium sulfate.

10. The simulated circulatory system of blood according to claim 1, wherein the inner wall of the simulated blood vessels is coated by lubricating materials to adjust friction coefficient thereof.

11. The simulated circulatory system of blood according to claim 1, further comprising a control device which comprises a pressure sensor, a flowmeter and a thermometer,
wherein the pressure sensor is configured to detect the pressure of the simulated blood flowing through the simulated blood vessels,
the flowmeter is configured to detect the flux of the simulated blood flowing through the simulated blood vessels,
the thermometer is configured to detect the temperature of the simulated blood flowing through the simulated blood vessels, and
the control device is configured to control the simulated heart assembly at least in part based on the parameters of the simulated blood detected by the pressure sensor, the flowmeter and the thermometer.

12. The simulated circulatory system of blood according to any one of claims 1-11, further comprising a detection and evaluation device, wherein the detection and evaluation device is connected to the simulated circulatory system of blood and is configured to detect the parameters of the implant and evaluate the performance of the implant at least in part based on the detected parameters.

13. The simulated circulatory system of blood according to claim 12, wherein the detected parameters include the variation of diameter and the movement of the implant.

14. The simulated circulatory system of blood according to claim 13, wherein the detection and evaluation device comprises an image recognition apparatus, a laser diameter measuring instrument and an evaluation apparatus, and wherein the image recognition apparatus is configured to detect the movement of the implant, the laser diameter measuring instrument is configured to detect the variation of diameter of the implant, and the evaluation apparatus is configured to evaluate the performance of the implant at least in part based on the detected parameters.

15. The simulated circulatory system of blood according to claim 14, wherein the detection and evaluation device further comprises a calculation apparatus, and the calculation apparatus is configured to calculate torsion degree, fatigue life and opening degree of the implant at least in part based on the detected parameters.

16. The simulated circulatory system of blood according to claim 12, wherein the implant is a stent.
